# EUROPÄISCHE PATENTSCHRIFT

(11) **EP 2 665 866 B1**
(45) Veröffentlichungstag und Bekanntmachung des Hinweises auf die Patenterteilung: **26.11.2014**
(21) Anmeldenummer: 12700146.9
(22) Anmeldetag: 04.01.2012
(51) Int. Cl.: E02D 3/074, E01B 27/14, E01B 27/20

(54) **HANDSTOPFER ZUM UNTERSTOPFEN EINES GLEISES**
A HAND-HELD TAMPER FOR TAMPING BALLAST OF A RAILWAY TRACK
BOURROIR MANUEL POUR LE BOURRAGE D'UNE VOIE FERRÉE

(30) Priorität: 19.01.2011 DE 102011008835
(43) Veröffentlichungstag der Anmeldung: 27.11.2013
(73) Patentinhaber: Robel Bahnbaumaschinen GmbH, 83395 Freilassing (DE)
(72) Erfinder: WIDLROITHER, Otto, 83395 Freilassing (DE)
(86) Internationale Anmeldenummer: PCT/EP2012/000019
(87) Internationale Veröffentlichungsnummer: WO 2012/097960

(56) Entgegenhaltungen:
- AT-B- 239 296
- DE-B- 1 058 082
- DE-B- 1 218 486
- US-A- 2 934 026

## Beschreibung

Die Erfindung betrifft einen Handstopfer zum Unterstopfen von Schotter eines Gleises, mit einem Antriebsmotor zur Rotation einer eine Unwucht aufweisenden, in einem Wellenrohr gelagerten und eine Wellenlängsrichtung aufweisenden Welle, die an einem vom Antriebsmotor distanzierten unteren Ende mit einer Unwucht ausgestattet ist, wobei das Wellenrohr an einem unteren, vom Antriebsmotor distanzierten Ende mit einer Stopfschaufel verbunden ist, die - bezüglich der Wellenlängsrichtung - eine Ober- und eine vom Antriebsmotor weiter distanzierte Unterkante aufweist.

Ein derartiger Handstopfer ist durch AT 239 296 bereits bekannt. Die im Wellenrohr befindliche Unwucht befindet sich oberhalb der Stopfschaufel, wobei diese an ihrem oberen Ende mit dem Wellenrohr verbunden ist.

Die Aufgabe der vorliegenden Erfindung liegt nun in der Schaffung eines Handstopfers der eingangs genannten Art, mit dem eine verbesserte Verdichtwirkung erzielbar ist.

Diese Aufgabe wird mit erfindungsgemäß mit einem Handstopfer der gattungsgemäßen Art dadurch gelöst, dass wenigstens 30 % einer in Wellenlängsrichtung verlaufenden Gesamthöhe hᵤ der Unwucht unterhalb der Oberkante der Stopfschaufel angeordnet sind.

Mit einer derartigen Verlagerung der durch die Unwucht bewirkten Vibrationen in den Schaufelbereich kann eine wesentlich verbesserte Verdichtung des Schotters erzielt werden. Außerdem wird die Vibrationsbelastung auf die im oberen Endbereich des Handstopfers positionierten Handgriffe reduziert.

Weitere Vorteile der Erfindung ergeben sich aus den Unteransprüchen und der Zeichnungsbeschreibung.

Im Folgenden wird die Erfindung anhand von in der Zeichnung dargestellten Ausführungsbeispielen näher beschrieben. Es zeigen: Fig. 1 und 2 Ansichten eines Handstopfers und Fig. 3 bis 9 verschiedene Details des lediglich im Stopfschaufelbereich dargestellten Handstopfers.

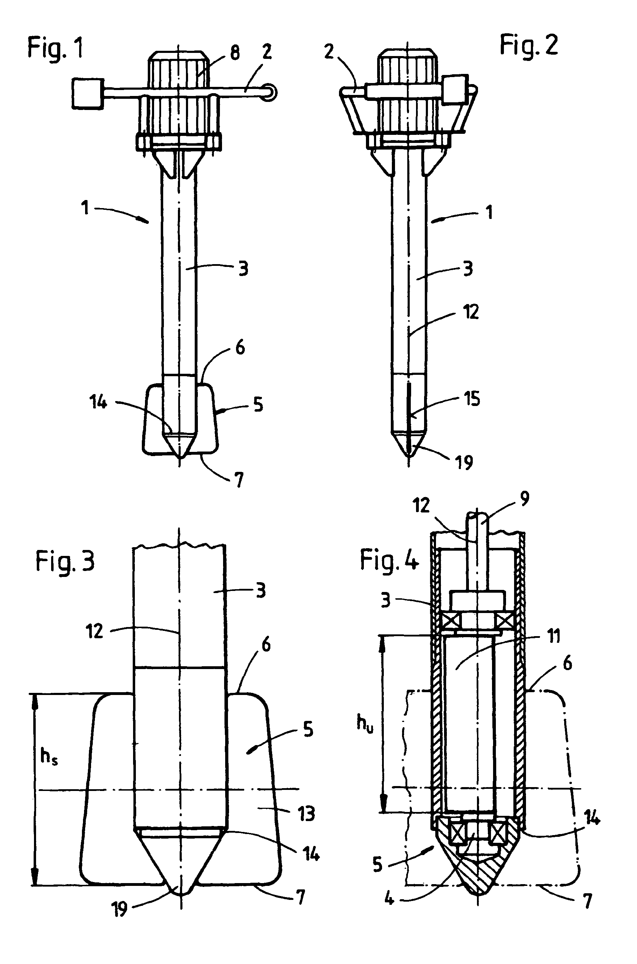

Ein in den Fig. 1 und 2 dargestellter Handstopfer 1 weist einen Antriebsmotor 8 auf, der mit Handgriffen 2 und mit einem Wellenrohr 3 verbunden ist. An einem vom Antriebsmotor 2 distanzierten unteren Ende 14 des Wellenrohres 3 ist eine Stopfschaufel 5 vorgesehen. Diese weist eine Höhe hₛ auf, die einerseits durch eine dem Antriebsmotor 8 nähere Oberkante 6 and andererseits durch eine im unteren Endbereich des Wellenrohres 3 gelegene Unterkante 7 begrenzt ist.

Wie in Fig. 4 ersichtlich, ist im Wellenrohr 3 eine durch den Antriebsmotor 8 um eine Achse bzw. Wellenlängsrichtung 12 rotierbare Welle 9 gelagert. Diese weist am einem unteren, vom Antriebsmotor 8 distanzierten Ende 4 eine Unwucht 11 mit einer in Wellenlängsrichtung 12 verlaufenden Gesamthöhe hᵤ auf. Gemäß der dargestellten Variante der Erfindung sind über 50 % der Gesamthöhe hᵤ der Unwucht 11 unterhalb der Oberkante 6 der Stopfschaufel 5 angeordnet.

Wie in Fig. 3 und 4 ersichtlich, sind das untere Ende 14 des Wellenrohres 3 sowie die Unwucht 11 bis in eine untere Hälfte 13 bzw. bis zur Unterkante 7 der Stopfschaufel 5 geführt. Eine Schaufelebene 15 (Fig. 2) der Stopfschaufel 5 ist parallel zur Wellenlängsrichtung 12 angeordnet. Das untere Ende 14 des Wellenrohres 3 ist mit einer sich zur Unterkante 7 der Stopfschaufel 5 kegelförmig verjüngenden Spitze 19 ausgebildet.

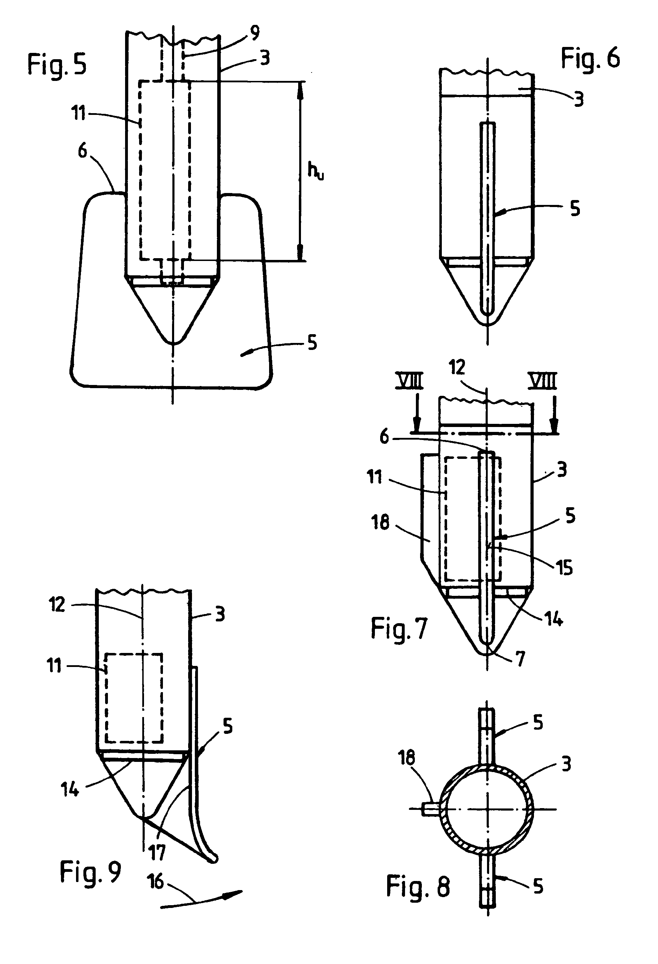

Wie in Fig. 5 und 6 ersichtlich, sind wenigstens 30 % der Gesamthöhe hᵤ der Unwucht 11 Unterhalb der Oberkante 6 der Stopfschaufel 5 positioniert.

In einer in Fig. 7 und 8 dargestellten Variante ist die Unwucht zu 100 % zwischen Ober- und Unterkante 6, 7 der Stopfschaufel 5 angeordnet. Am unteren Ende 14 des Wellenrohres 3 ist eine normal zur Schaufelebene 15 der Stopfschaufel 5 sowie in der Wellenlängsrichtung 12 verlaufende Stabilisierrippe 18 vorgesehen.

Gemäß Fig. 9 ist das untere Ende 14 des Wellenrohres 3 mit einer - bezüglich einer Stopfrichtung 16 - hinteren Seite 17 der Stopfschaufel 5 verbunden.

## Patentansprüche

1. Handstopfer zum Unterstopfen von Schotter eines Gleises, mit einem Antriebsmotor (8) zur Rotation einer eine Unwucht (11) aufweisenden, in einem Wellenrohr (3) gelagerten und eine Wellenlängsrichtung (12) aufweisenden Welle (9), die an einem vom Antriebsmotor (8) distanzierten unteren Ende (4) mit einer Unwucht (11) ausgestattet ist, wobei das Wellenrohr (3) an einem unteren, vom Antriebsmotor (8) distanzierten Ende (14) mit einer Stopfschaufel (5) verbunden ist, die - bezüglich der Wellenlängsrichtung (12) - eine Ober- und eine vom Antriebsmotor (8) weiter distanzierte Unterkante (6,7) aufweist, **dadurch gekennzeichnet, dass** wenigstens 30 % einer in Wellenlängsrichtung (12) verlaufenden Gesamthöhe hᵤ der Unwucht (11) unterhalb der Oberkante (6) der Stopfschaufel (5) angeordnet sind.

2. Handstopfer nach Anspruch 1, **dadurch gekennzeichnet, dass** das untere Ende (14) des Wellenrohres (3) sowie die Unwucht (11) bis in eine untere Hälfte (13) der Stopfschaufel (5) geführt sind.

3. Handstopfer nach Anspruch 1, **dadurch gekennzeichnet, dass** das untere Ende (14) des Wellenrohres (3) an der Unterkante (7) der Stopfschaufel (5) endet und die Unwucht (11) zu mehr als 50% ihrer Gesamthöhe hᵤ zwischen Ober- und Unterkante (6, 7) der Stopfschaufel (5) angeordnet ist.

4. Handstopfer nach einem der Ansprüche 1, 2 oder 3, **dadurch gekennzeichnet, dass** eine Schaufelebene (15) der Stopfschaufel (5) parallel zur Wellenlängsrichtung (12) angeordnet ist.

5. Handstopfer nach einem der Ansprüche 1, 2 oder 3, **dadurch gekennzeichnet, dass** das untere Ende (14) des Wellenrohres (3) mit einer - bezüglich einer Stopfrichtung (16) - hinteren Seite (17) der Stopfschaufel (5) verbunden ist.

6. Handstopfer nach einem der Ansprüche 1 bis 5, **dadurch gekennzeichnet, dass** das untere Ende (14) des Wellenrohres (3) mit einer sich zur Unterkante (7) der Stopfschaufel (5) kegelförmig verjüngenden Spitze (19) ausgebildet ist.

7. Handstopfer nach einem der Ansprüche 1 bis 6, **dadurch gekennzeichnet, dass** am unteren Ende (14) des Wellenrohres (3) mit einer normal zur Schaufelebene (15) der Stopfschaufel (5) sowie in der Wellenlängsrichtung (12) verlaufende Stabilisierrippe (18) angeordnet ist.

## Claims

1. A hand tamper for tamping ballast of a track, including a drive motor (8) for rotating a shaft (9) which has a longitudinal shaft direction (12) and is supported in a shaft tube (3) and comprises an imbalance (11), the shaft (9) being equipped - at a lower end (4) spaced from the drive motor (8) - with an imbalance (11), wherein the shaft tube (3) is connected at a lower end (14) spaced from the drive motor (8) to a tamping blade (5) which has an upper edge (6) and a lower edge (7), with regard to the longitudinal shaft direction (12), the latter being spaced farther from the drive motor (8), **characterized in that** at least 30 % of an overall height hᵤ, extending in the longitudinal shaft direction (12), of the imbalance (11) is arranged below the upper edge (6) of the tamping blade (5).

2. A hand tamper according to claim 1, **characterized in that** the lower end (14) of the shaft tube (3) and the imbalance (11) extend into a lower half (13) of the tamping blade (5).

3. A hand tamper according to claim 1, **characterized in that** the lower end (14) of the shaft tube (3) ends at the lower edge (7) of the tamping blade (5), and more than 50% of the overall height hᵤ of the imbalance (11) is arranged between the upper and lower edge (6, 7) of the tamping blade (5).

4. A hand tamper according to one of claims 1, 2 or 3, **characterized in that** a blade plane (15) of the tamping blade (5) is arranged parallel to the longitudinal shaft direction (12).

5. A hand tamper according to one of claims 1, 2 or 3, **characterized in that** the lower edge (14) of the shaft tube (3) is connected to a rear side (17) - with regard to a tamping direction (16) - of the tamping blade (5).

6. A hand tamper according to one of claims 1 to 5, **characterized in that** the lower end (14) of the shaft tube (3) is shaped so as to have a point (19) which is tapered cone-like toward the lower edge (7) of the tamping blade (5).

7. A hand tamper according to one of claims 1 to 6, **characterized in that** at the lower edge (14) of the shaft tube (3), a stabilizing fin (18) is provided which extends perpendicularly to the blade plane (15) of the tamping blade (5) and in the longitudinal shaft direction (12).

## Revendications

1. Bourreuse manuelle destinée au bourrage de ballast d'une voie ferrée, comprenant un moteur d'entraînement (8) pour la rotation d'un arbre (9), présentant un balourd (11), logé dans un tube (3) pour l'arbre et orienté dans une direction longitudinale (12) d'arbre, arbre qui est équipé d'un balourd (11) à une extrémité inférieure (4) espacée du moteur d'entraînement (8), le tube (3) pour l'arbre étant relié à une extrémité (14) inférieure, espacée du moteur d'entraînement (8), avec une pelle (5) de bourrage, qui présente un chant supérieur (6) et un chant inférieur (7), à une distance plus grande du moteur d'entraînement, **caractérisée en ce qu'**au moins 30 % de la hauteur totale hᵤ du balourd (11) s'étendant dans la direction longitudinale (12) de l'arbre est placée en dessous du chant supérieur (6) de la pelle (5) de bourrage.

2. Bourreuse manuelle selon la revendication 1, **caractérisée en ce que** l'extrémité (14) inférieure du tube (3) pour l'arbre ainsi que le balourd (11) sont entraînés jusqu'à la moitié (13) inférieure de la pelle (5) de bourrage.

3. Bourreuse manuelle selon la revendication 1, **caractérisée en ce que** l'extrémité (14) inférieure du tube (3) pour l'arbre s'arrête au niveau du chant inférieur (7) de la pelle (5) de bourrage et que le balourd (11) est situé à plus de 50 % de sa hauteur totale h_{U} entre le chant supérieur (6) et le chant inférieur (7) de la pelle (5) de bourrage.

4. Bourreuse manuelle selon l'une des revendications 1, 2 ou 3, **caractérisée en ce qu'**un plan (15) de pelle de la pelle (5) de bourrage est disposé parallèle à la direction longitudinale (12) de l'arbre.

5. Bourreuse manuelle selon l'une des revendications 1, 2 ou 3, **caractérisée en ce que** l'extrémité (14) inférieure du tube (3) pour l'arbre est reliée, par rapport à une direction (16) de bourrage, avec une face arrière (17) de la pelle (5) de bourrage.

6. Bourreuse manuelle selon l'une des revendications 1 à 5, **caractérisée en ce que** l'extrémité (14) inférieure du tube (3) pour l'arbre est conçue avec une pointe (19) en forme de cône s'amenuisant vers le chant inférieur (7) de la pelle (5) de bourrage.

7. Bourreuse manuelle selon l'une des revendications 1 à 6, **caractérisée en ce qu'**un élément de cerclage (18) de stabilisation, normal par rapport au plan (15) de pelle de la pelle (5) de bourrage, s'étendant également dans la direction longitudinale (12) de l'arbre, est disposé à l'extrémité (14) inférieure du tube (3) pour l'arbre.
